# EUROPEAN PATENT APPLICATION

(11) **EP 3 007 098 A1**
(43) Date of publication of application: **13.04.2016**
(21) Application number: 13886491.3
(22) Date of filing: 17.09.2013
(51) Int. Cl.: G06K 9/00

(54) **METHOD, DEVICE AND SYSTEM FOR REALIZING VISUAL IDENTIFICATION**

(30) Priority: 07.06.2013 CN 201310226022
(71) Applicant: ZTE Corporation, Shenzhen, Guangdong 518057 (CN)
(72) Inventor: LIU, Haijun, Shenzhen Guangdong 518057 (CN); ZOU, Changle, Shenzhen Guangdong 518057 (CN)
(74) Representative: Tischner, Oliver
(86) International application number: PCT/CN2013/083691
(87) International publication number: WO 2014/194586

(57) **Abstract**

Provided are a method, device and system for realizing visual identification. A visual identification device learns a visual identification feature of an identified device, and performs visual identification on the identified device accordingly. Thus automatic identification of the device is realized in a visual manner, and the unified manipulation on multiple identified devices can be easily realized.

## Description

### TECHNICAL FIELD

The present disclosure relates to the field of communications, and in particular to a method, device and system for realizing visual identification.

### BACKGROUND

The development of digital multimedia and network enriches the entertainment experiences in people's daily life. The current technologies enable people to watch high-definition TV at home, and sources of TV programs include a digital optical disk, a cable TV, the Internet, etc.; besides, people can also use a PAD (an electronic tablet device) and a mobile phone to realize these experiences; the existing technologies also include that people can transfer the playing of digital contents among different devices through the network, and control the playing of a device through a remote controller and gestures, for example, controlling the switching of channels and controlling the volume.

With the development of the technologies, there are more and more requirements for sharing and transferring of contents among multiple devices; a traditional method for controlling a device includes: using a remote controller of the device to control, loading software supporting an interworking protocol on the device with the capability of calculation and network (e.g. a mobile phone and a PAD) to implement the control to another device, controlling the device with a gesture identification function through gestures, and so on. The remote controllers of different devices are usually not applicable to each other, and most of the remote controllers are not equipped with a network function, thus it is necessary to change remote controllers from time to time when implementing the control of multiple devices through the remote controllers, which is complicated to operate; when a device is controlled through the device with the capability of calculation and networking or through gestures, users are required to learn how to use different operating tools, which is not convenient.

Thus, how to realize automatic identification of a device is a problem to be solved currently.

### SUMMARY

In view of this, the present disclosure is intended to provide a method, device and system for realizing visual identification, so as to realize the automatic identification of a device.

To this end, the technical solutions of the present disclosure are implemented as follows.

A method for realizing visual identification is provided, which includes that:
a visual identification device learns a visual identification feature of an identified device, and performs visual identification on the identified device according to the visual identification feature.

In the solution, the way of learning the visual identification feature may include that:
the visual identification device receives a message from the identified device, wherein the message includes the visual identification feature of the identified device; or,
the visual identification device sends a message to the identified device, and receives a response message from the identified device, wherein the response message includes the visual identification feature of the identified device.

In the solution, the process of performing visual identification on the identified device may include that:
a visual identity which is used for identifying the identified device are obtained, and the visual identity is compared with the visual identification feature of the identified device to identify the identified device.

In the solution, the way of obtaining the visual identity may include that:
the visual identification device acquires an image or video clip in a visual range through a camera, and analyzes the acquired image or video clip to obtain the visual identity; or,
the visual identification device reads the visual identity which is pre-stored by the visual identification device itself.

In the solution, the visual identity may include at least one of the following: a bar code label, a two-dimension code label, a text label and a trademark sign.

In the solution, after completing the visual identification on the identified device, the visual identification device may perform identification result verification with the identified device.

In the solution, the identification result verification may be implemented in a way that the identified device sends a visual signal to the visual identification device.

In the solution, the visual signal may include at least one of the following: a visible optical signal, an invisible optical signal, an optical signal feature, and a figure and image on a display screen.

In the solution, the method may further include that: after completing the visual identification on the identified device, the visual identification device measures spatial location information of the identified device.

In the solution, the visual identification feature may include at least one of the following: a label, a device figure, a device image and a visual signal.

A device for realizing visual identification which is a visual identification device is provided; the device includes an identifying-side control unit and an identifying-side execution unit; wherein,
the identifying-side control unit is configured to learn a visual identification feature of the identified device, and control the identifying-side execution unit to perform the visual identification on the identified device according to the visual identification feature; and
the identifying-side execution unit is configured to perform the visual identification on the identified device according to the control of the identifying-side control unit.

In the solution, when learning the visual identification feature, the identifying-side control unit may be configured to:
receive a message from the identified device, wherein the message includes the visual identification feature of the identified device; or
send a message to the identified device, and receive a response message from the identified device, wherein the response message includes the visual identification feature of the identified device.

In the solution, when performing the visual identification on the identified device, the identifying-side execution unit may be configured to:
obtain a visual identity which is used for identifying the identified device, and compare the visual identity with the visual identification feature of the identified device to identify the identified device.

In the solution, when obtaining the visual identity, the identifying-side execution unit may be configured to:
acquire an image or the video clip in the visual range through a camera, and analyze the acquired image or video clip to obtain the visual identity; or,
read the visual identity which is pre-stored in the visual identification device.

In the solution, the visual identity may include at least one of the following: a bar code label, a two-dimension code label, a text label and a trademark sign.

In the solution, the identifying-side control unit may be further configured to, after completing the visual identification on the identified device, control the identifying-side execution unit to perform the identification result verification with the identified device.

In the solution, when performing the identification result verification, the identifying-side execution unit may be configured to receive a visual signal from the identified device to implement the identification result verification.

In the solution, the visual signal may include at least one of the following: a visible optical signal, an invisible optical signal, an optical signal feature, and a figure and image on a display screen.

In the solution, after completing the visual identification on the identified device, the identifying-side control unit may be further configured to control the identifying-side execution unit to measure the spatial location information of the identified device.

In the solution, the device may further include a storage unit, which is configured to store information for identifying the identified device.

In the solution, the device may further include an identifying-side network unit, which is configured to support communication between each unit in the device and the identified device.

In the solution, the visual identification feature may include at least one of the following: a label, a device figure, a device image and a visual signal.

A device for realizing visual identification which is an identified device is provided; the device includes an identified-side control unit and an identified-side execution unit; wherein,
the identified-side control unit is configured to control the identified-side execution unit to provide a visual identification feature of the identified device to the visual identification device; and
the identified-side execution unit is configured to provide the visual identification feature to the visual identification device according to the control of the identified-side control unit.

In the solution, when providing the visual identification feature, the identified-side execution unit is configured to:
send a message to the visual identification device, wherein the message includes the visual identification feature; or,
receive a message from the visual identification device, and return the response message to the visual identification device, wherein the response message includes the visual identification feature.

In the solution, the identified-side control unit may be further configured to control the identified-side execution unit to perform identification result verification with the visual identification device.

In the solution, when performing the identification result verification, the identified-side control unit may be configured to send a visual signal to the visual identification device to implement the identification result verification.

In the solution, the visual signal may include at least one of the following: a visible optical signal, an invisible optical signal, an optical signal feature, and a figure and image on a display screen.

In the solution, the device may further include an identified-side network unit, which is configured to support the communication between each unit in the device and the visual identification device.

In the solution, the visual identification feature may include at least one of the following: a label, a device figure, a device image and a visual signal.

A system for realizing visual identification is provided, which includes a visual identification device and an identified device; wherein,
the visual identification device is configured to learn a visual identification feature of the identified device, and perform the visual identification on the identified device according to the visual identification feature; and
the identified device is configured to provide the visual identification feature to the visual identification device.

The present disclosure can realize the automatic identification of a device in a visual manner; a user can easily select the device to be manipulated through an interface provided by a visual identification device during operation, and it is convenient for the user to determine the manipulated device when manipulating by fingers, thereby simplifying the operation of the user, improving the user experience, and reducing the costs of all parties in the industrial chain.

### BRIEF DESCRIPTION OF THE DRAWINGS

Fig. 1 is a flowchart of realizing visual identification according to an embodiment of the present disclosure;
Fig. 2 is a schematic diagram of realizing visual identification according to an embodiment of the present disclosure;
Fig. 3 is a diagram of a visual identity according to an embodiment of the present disclosure;
Fig. 4 is a diagram of a visual identity according another embodiment of the present disclosure;
Fig. 5 is a diagram of a system for realizing visual identification according to the present disclosure;
Fig. 6 is a flowchart of realizing visual identification according to an embodiment of the present disclosure; and
Fig. 7 is a flowchart of realizing visual identification according to another embodiment of the present disclosure.

### DETAILED DESCRIPTION

The technical solutions of the present disclosure are further elaborated below in combination with the accompanying drawings and specific embodiments.

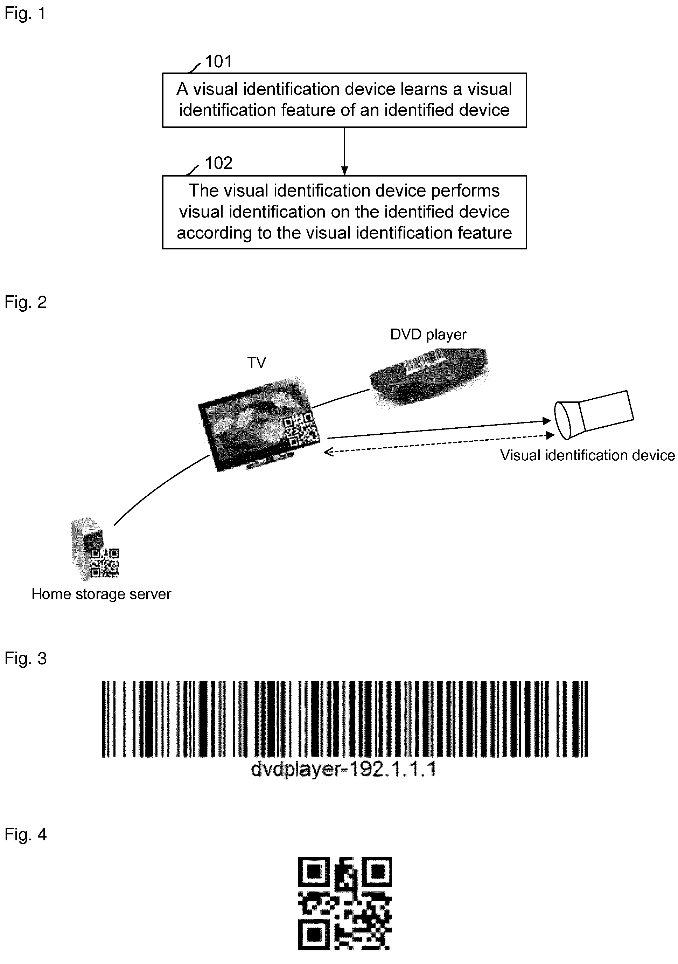

For realizing the automatic identification of a device in a visual manner, as shown in Fig. 1, a method for identifying a device provided by an embodiment of the present disclosure mainly includes the following steps.

Step 101 is that a visual identification device collects a visual identification feature of an identified device.

The visual identification feature is the feature which can identify the identified device visually, such as a label, a device figure or image.

Specifically, the visual identification device can receive a broadcast or multicast message from the identified device, wherein the broadcast or multicast message includes the visual identification feature of the identified device; or,
the visual identification device sends a query broadcast or multicast message, and receives a response message which is returned by the identified device supporting the visual identification, wherein the response message includes the visual identification feature of the identified device.

Step 102 is that the visual identification device performs visual identification on the identified device according to the collected a visual identification feature.

Specifically, the visual identification device can acquire an image or a video clip within a visual range through a camera randomly or periodically, analyzes the acquired image or video clip and obtains an analysis result, so as to check whether an identifiable device exists; the visual identification device identifies the identified device according to the analysis result and in combination with the collected visual identification feature of the identified device.

The visual identification device can extract, from the acquired image or video clip, at least one of the following visual identities of the identified device: a bar code label, a two-dimension code label, a text label and a trademark sign and so on.

Besides returning the response message to the visual identification device, the identified device may also send a visual signal. Specifically speaking, after completing the visual identification on the identified device, the visual identification device may also perform identification result verification with the identified device, so as to ensure the accuracy. The identification result verification can be implemented by sending the visual signal.

After completing the visual identification on the identified device, the visual identification device measures spatial location information of the identified device, wherein the spatial location information at least may be described as one of the following location information of the identified device relative to the visual identification device: spatial three-dimensional coordinates, angles and distances. The spatial location information can be recorded.

The above method for identifying a device is further elaborated below in combination with the specific embodiments.

Fig. 2 is a diagram of an application scenario according to an embodiment of the present disclosure; there are four devices in the application scenario, which are a visual identification device, a television (TV), a DVD player and a home storage server, respectively. In the present embodiment, the location relation of all the devices placed is that: there is no barrier between the visual identification device and any other device, that is to say, if the visual identification device emits light, then the light can directly fall on the TV, the DVD player and the home storage server without any barrier. Certainly, the light emitted by the visual identification device is not limited to a single angle in the embodiment of the present disclosure.

All the four devices have network interfaces, e.g. the network interfaces supporting the IEEE 802.11 b/g/n or supporting the IEEE 802.3, so they can be connected to an IP network. Each device can send and receive a message to and from the other devices, and process or transfer manipulation instructions.

The discovery and connection between each other on the network and the capability of sending and receiving a message of this device can be implemented by using either a Universal Plug and Play (UPnP) technology, or a multicast Domain Name System (mDNS) and a DNS-Service Discovery (DNS-SD) technology; such technologies are used in an IP network, responding to query and providing a function call according to a predefined message format in a query unicasting or multicasting way. For example, the UPnP technology sets rules about how a media display device (e.g. the TV) and a server (e.g. the DVD player and the home storage server) respond to query and what calling functions they provide.

The visual identification device further includes a camera with the capability of acquiring images and videos, and it is equipped with a ranging function. The camera of the visual identification device can implement the following functions: taking a picture of the device within the visual range of the camera, and identifying information on the label of the device, and receiving the visual signal of other devices. The ranging function is used for measuring the distance between the visual identification device and the identified device, and can be implemented by using a specialized ranging module, such as a laser and infrared rangefinder which calculates the distance between the visual identification device and the identified device through the transmission and reflection of infrared ray; in practical application, the laser and infrared rangefinder with a precision of 2mm can be selected to use.

In the embodiment of the present embodiment, the visual identification device can identify the devices within its visual range; the specific implementation method may be that: the camera rotates in a three-dimensional space to acquire images, and the ranging module searches for predefined visual identities in the images acquired by the camera and analyzes the identities; here, the predefined visual identities may be either the images and figures pre-stored in the visual identification device (in this case, the visual identification device can read the visual identity pre-stored by it), or the received images and figures from the identified device. In Fig. 2, the camera of the visual identification device acquires an image by taking a picture; there are three devices in the image, namely the TV, the DVD player and the home storage server, and the bar codes and/or the two-dimensional code labels are pasted or printed or embedded on the three devices. After analyzing the image, the visual identification device identifies that there are some visual identities for identifying the identified device in the image, identifies the visual identities respectively and stores the identified information, then performs distance measurement on the device where the visual identities are, and stores a result of the distance measurement and the information of the visual identities together.

Another embodiment of the present disclosure is that the visual identification device receives feature images (e.g. photo data of the device at various angles) from the devices, such as the TV, the DVD player and the home storage server, then retrieves the feature images from a captured panoramic image, and accordingly measures and records the locations of the devices. This embodiment may be implemented by using a feature detecting and matching technology in the computer vision technology.

In Fig. 3, information on the bar code label on the device is "dvdplayer-192.1.1.1 ", representing that the device is a DVD player, whose network address is 192.1.1.1. If the bar code label is pasted or printed or embedded on the DVD player, then the information may be acquired by the camera of the visual identification device, and the visual identification device will identify and store the information.

In Fig. 4, information on the two-dimensional code label on the device is "tv-192.1.1.2", representing that the device is a TV, whose network address is 192.1.1.2. If the two-dimensional code label is pasted or printed or embedded on the TV, then the information may be acquired by the camera of the visual identification device, and the visual identification device will identify and store the information.

The above visual identities used for identifying the identified device can also include more contents, such as an abbreviation and a self-defined name of the device.

Besides the above embodiments involving Fig. 3 and Fig. 4, the identified device can also be identified by text identification, namely marking text on the identified device; for example, a paper label written with "tv-192.1.1.2" is directly pasted on the TV, and the visual identification device identifies the text on the paper label to further identify the device.

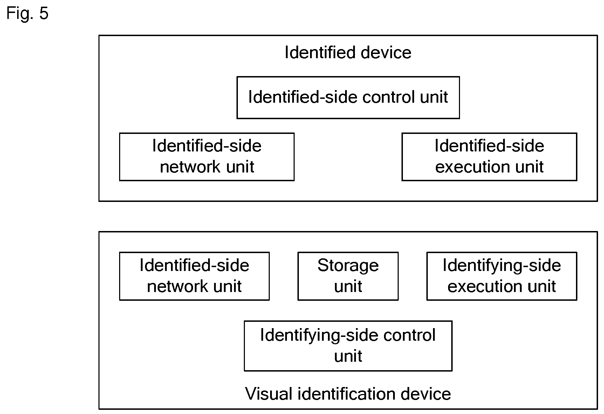

Corresponding to the method for identifying a device, the embodiment of the present disclosure also provides a system for identifying a device; as shown in Fig. 5, the system includes a visual identification device and an identified device; wherein, the identified device includes an identified-side control unit, an identified-side execution unit and an identified-side network unit. In general, the identified-side control unit is configured to perform a logical control involving the visual identification of the identified device side; the identified-side execution unit is configured to perform concrete operations involving the visual identification according to the logical control; the identified-side network unit is configured to implement the communication between the identified device and the visual identification device.

Specifically speaking, as an interactive interface between the identified device and the visual identification device, the identified-side network unit includes a network interface, which can execute interconnection and sending and receiving of the messages between the identified device and the visual identification device based on indication of the identified-side control unit.

As a coordinated control unit of the identified device, the identified-side control unit can indicate the identified-side execution unit to send a visual identification feature to the visual identification device (e.g. the visual identification feature is carried in the broadcast or multicast message to send), so that the visual identification device performs visual identification on the identified device. Certainly, the identified-side control unit can also receive and analyze the query broadcast or multicast message sent by the visual identification device, and indicate the identified-side execution unit to send a response message to the visual identification device according to the analysis result, wherein the response message includes the visual identification feature of the identified device.

Besides returning the response message to the visual identification device, the identified-side execution unit can also send a visual signal, and this operation can be performed by the identified-side execution unit according to the indication of the identified-side control unit.

The visual signal can be either features of various visible optical signals, invisible optical signals and optical signals (e.g. a change rule of the optical signals), or the images and figures on the display screen; examples are as follows:
1. regular flicker of white light beam; for example, flickering for several times each second, and lasting some time each time, and flicking for several seconds in all;
2. red light, green light and blue light flicker alternately and last for some times;
3. light on a certain frequency emits continually for some seconds;
4. photos, or other figures, images and videos of the identified device taken at one or some angles are displayed on the display screen.

Note that, the visual identities used for identifying the identified device can be set on the identified device, for representing the device in a visual manner. The visual identities may at least be labels pasted on an outer surface or photos (taken at one or more angles), pictures, trademark signs of the device, or other figures, images or video chips displayed on a screen. These visual identities can also serve as the visual identification features which are sent to the visual identification device by the identified device.

The visual identification device includes an identifying-side control unit, an identifying-side execution unit and an identifying-side network unit. In general, the identifying-side control unit is configured to perform a logical control involving visual identification of the visual identification device side; the identifying-side execution unit is configured to perform concrete operations involving the visual identification according to the logical control of the identifying-side control unit; the identifying-side network unit is configured to support the communication between the visual identification device and the identified device.

Specifically speaking, as an interactive interface between the visual identification device and the identified device, the identifying-side network unit includes the network interfaces, which can execute interconnection and sending and receiving of the messages between the visual identification device and the identified device based on indication of the identifying-side control unit.

For example, the identifying-side network unit receives a broadcast or multicast message from the identified device, wherein the broadcast or multicast message includes the visual identification feature of the identified device; or, the identifying-side network unit sends a query broadcast or multicast message, and receives a response message from the identified device, wherein the response message includes the visual identification feature of the identified device.

As a coordinated control unit of the visual identification device, the identifying-side control unit can perform visual identification on the identified device according to the collected visual identification features.

For example, the identifying-side control unit can indicate the identifying-side execution unit to acquire an image or video clip within the visual range through a camera; the identifying-side control unit can also analyze the acquired image or video clip, and identify the identified device according to the analysis result and the visual identification feature of the identified device. For example, the acquired image or video chip is analyzed to obtain the visual identity used for identifying the identified device, and the visual identity is compared with the visual identification feature of the identified device to identify the identified device.

The identifying-side control unit can also indicate the identifying-side execution unit to acquire a visual signal from the identified device and accordingly perform the identification result the identification result verification with the identified device.

In addition, after completing the visual identification on the identified device, the identifying-side control unit can also control the ranging module (e.g. a laser and infrared rangefinder) to measure the spatial location information of the identified device. The ranging module may be set in the identifying-side execution unit.

The visual identification device may also include a storage unit, which is configured to store the spatial location information and the visual identification feature of the identified device. The storage unit may also store a device identity, a network address and other information of the identified device, wherein, the spatial location information may be geometrical parameters of the identified device when the visual identification device is the origin of space coordinates, such as a three-dimensional space coordinate and a vector coordinate. Data stored in the visual identification device may be provided to the units in this device for use, or may also be provided to other devices for use. As an embodiment, the storage unit may provide the spatial location information of the identified device to a gesture identification unit (not shown in the diagram) for use which is used for performing gesture identification subsequently; the gesture identification unit judges objects to be manipulated by gestures according to directions of the gestures and the location of the identified device.

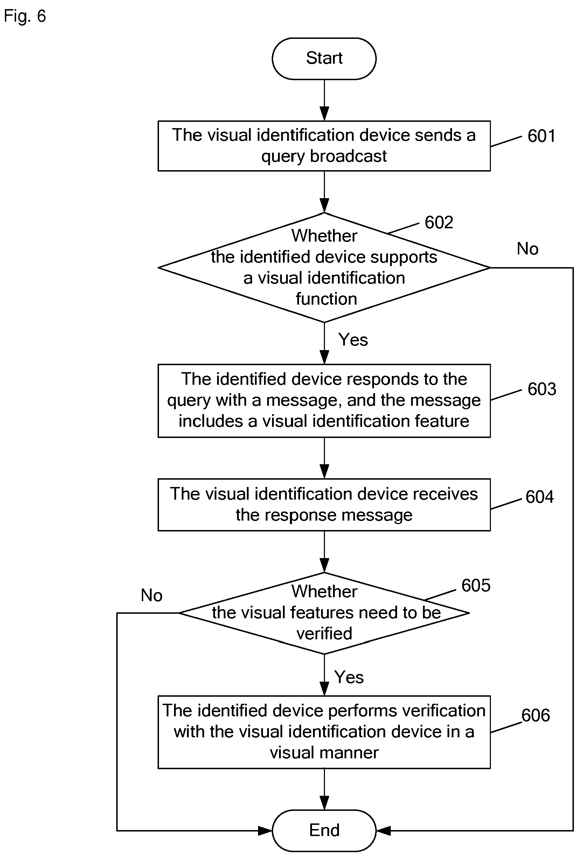

The present disclosure is further described in combination with the flow in Fig. 6 below; the flow in Fig. 6 mainly includes the following steps.

Step 601 is that the visual identification device sends a query broadcast.

The visual identification device may first send a query broadcast or multicast message to query what device in the network support the visual identification.

As another embodiment, the identified device may also first send a broadcast or multicast message to issue the information of this device, including whether to support the visual identification.

Step 602 is that the identified device receiving the query broadcast judges whether it supports the visual identification; if so, Step 603 is performed; or else, the flow is ended.

Step 603 is that the identified device supporting the visual identification sends a response message to the visual identification device, wherein the response message includes a visual identification feature, such as a label, a device figure, a device image and a visual signal, and may also include information about whether the identified device provides a visual verification function.

Step 604 is that the visual identification device receives the response message from the identified device.

After receiving the response message, the visual identification device performs visual identification according to the data in the response message, including: acquiring an image in the visual range through a camera randomly or periodically, and then analyzing the acquired image to check whether there is an identifiable identified device. For example, the acquired image is analyzed to determine whether there are bar codes and two-dimensional codes in the image; when the bar codes and the two-dimensional codes are found, information marked by the bar codes and the two-dimensional codes is identified, and the information is compared with the visual identification feature of the identified device to identify the identified device. In the present embodiment, the bar codes and the two-dimensional codes are used for identifying the identified device, and the visual identification device records an identification result.

According to the visual identification feature provided by the identified device, the visual identification device can search, according to the acquired image, for the objects which conform to the image and figure provided by the identified device, so that the identified device is determined.

Step 605 is that the visual identification device judges whether it is needed to verify the visual feature; if so, Step 606 is performed; or else, the flow is ended.

The visual identification device may judge whether it is needed to verify the visual feature according to the information about whether the identified device provides the visual verification function which is included in the response message of the identified device.

Step 606 is that the identified device performs verification with the visual identification device in a visual manner.

The identified device can perform verification with the visual identification device by one of the following ways:
1. regular flicker of white light beam; for example, flickering for several times each second, and lasting some time each time, and flicking for several seconds in all;
2. red light, green light and blue light flicker alternately and last for some times;
3. light on a certain frequency emits continually for some seconds;
4. photos, or other figures, images and videos of the identified device taken at one or some angles are displayed on the display screen.

The visual identification device needs to learn in advance the regular change of optical signal features when the identified device performs the verification, so that the verification of the visual manner is implemented. Note that, the verification of the visual manner in the embodiment of the present disclosure may be performed through visible light, invisible light, an image, a figure, etc.

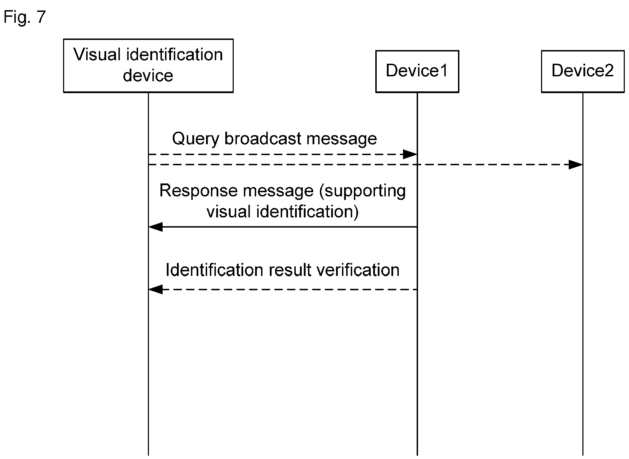

With reference to Fig. 7, in the present embodiment, the visual identification device completes visual scanning discovery of the identified device and the verification of the visual manner; the identified device may be a TV, a DVD player, etc.

The visual identification device sends a query broadcast message; message contents refer to the description in the above corresponding embodiments, so they will not be repeated here.

The device 1 supports visual identification, sends a response message, and indicates the visual identification feature of this device to the visual identification device; the device 2 does not support visual identification, thereby not responding to the visual identification device;
the verification of the visual manner is performed between the visual identification device and the device 1, such verification is based on computer vision, and the visual manner can be visible light, invisible light, an image, a figure, etc., which refers to the description in the above corresponding embodiments, so it will not be repeated here.

Besides, in the embodiment of the present disclosure, the TV, the DVD player and the storage server serve as identified devices, but the embodiment of the present disclosure is not limited to these devices; in practical application, all of a computer, a piece of sound equipment, a speaker, a projector, a set-top box and others may serve as the identified devices in the present disclosure; even other industrial devices, such as an automobile, a machine tool and a ship, can be identified by the visual identification devices.

In the above embodiments, the camera of the visual identification device may have various specifications; for example, the camera can have a fixed focal length or a changeable focal length, the rotation space may be various angles including up, down, left and right, or only support the left and right angles. The rangefinder may be either a laser and infrared rangefinder, or a light measurement rangefinder of other wave bands; it is feasible to use three cameras to measure the distance, or use more cameras to measure the distance by weighting adjustment and other methods.

In the above embodiments, the technologies related to the network can be based on the IP network supported by the IEEE 802.3, the IEEE 802.11b/g/n, the POWERLINE, the CABLE, the Public Switched Telephone Network (PSTN), the 3rd Generation Partnership Project (3GPP) network, the 3GPP2 network and other communication networks; the operation system of each device may be a UNIX operation system, a WINDOWS operation system, an ANDROID operation system, an IOS operation system, etc.; and a user interface can be the JAVA language interface, etc.

If the integrated units and modules of the embodiments of the present disclosure are realized in the form of software function units, and sold or used as independent products, they may be also stored in a computer-readable storage medium. Based on such understanding, an essential part or a part contributing to the technology of the technical solutions provided by the present disclosure can be embodied in the form of software product, this computer software product is stored in a storage medium, and includes some instructions for making a computer device (which can be a personal computer, a server or a network device, etc.) execute all or a part of the method described in each embodiment of the present disclosure. The above storage media include a U flash disk, a mobile hard disk, a Read-Only Memory (ROM), a Random Access Memory (RAM), a magnetic disk or an optical disk and other media which can store program codes. Thus, the embodiments of the present disclosure are not limited to any specific combination of hardware and software.

Correspondingly, an embodiment of the present disclosure also provides a computer storage medium which stores computer programs; the computer programs are used for implementing the method for identifying a device of the present disclosure.

Note that, the identified-side control unit may be a control chip, or a single chip, etc. in the identified device; the identified-side execution unit may be a CPU or others in the identified device; the identified-side network unit may be a communication module, such as a transceiver, in the identified device. The identifying-side control unit may be a control chip, or a single chip, etc. in the visual identification device; the identifying-side execution unit may be a CPU or others in the visual identification device; the identifying-side network unit may be a communication module, such as a transceiver, in the visual identification device. The storage unit may be a memory, a database, and so on; the gesture identification unit may be a current common device used for performing the gesture identification.

The above are only the preferred embodiments of the present disclosure, and not intended to limit the scope of the claims of the present disclosure.

## Claims

1. A method for realizing visual identification, comprising:
learning, by a visual identification device, a visual identification feature of an identified device, and performing visual identification on the identified device according to the visual identification feature.

2. The method according to claim 1, wherein the way of learning the visual identification feature comprises:
receiving, by the visual identification device, a message from the identified device, wherein the message comprises the visual identification feature of the identified device; or,
sending, by the visual identification device, a message to the identified device, and receiving a response message from the identified device, wherein the response message comprises the visual identification feature of the identified device.

3. The method according to claim 1 or 2, wherein the process of performing the visual identification on the identified device comprises:
obtaining a visual identity which is used for identifying the identified device, and comparing the visual identity with the visual identification feature of the identified device to identify the identified device.

4. The method according to claim 3, wherein the way of obtaining the visual identity comprises:
acquiring, by the visual identification device, an image or video clip in a visual range through a camera, and analyzing the acquired image or video clip to obtain the visual identity; or,
reading, by the visual identification device, the visual identity which is pre-stored by the visual identification device itself.

5. The method according to claim 3, wherein the visual identity comprises at least one of the following: a bar code label, a two-dimension code label, a text label and a trademark sign.

6. The method according to claim 1 or 2, wherein after completing the visual identification on the identified device, the visual identification device performs identification result verification with the identified device.

7. The method according to claim 6, wherein the identification result verification is implemented in a way that the identified device sends a visual signal to the visual identification device.

8. The method according to claim 7, wherein the visual signal comprises at least one of the following: a visible optical signal, an invisible optical signal, an optical signal feature, and a figure and image on a display screen.

9. The method according to claim 1, further comprising: after completing the visual identification on the identified device, measuring, by the visual identification device, spatial location information of the identified device.

10. The method according to claim 1, wherein the visual identification feature comprises at least one of the following: a label, a device figure, a device image and a visual signal.

11. A device for realizing visual identification, the device being a visual identification device and comprising an identifying-side control unit and an identifying-side execution unit; wherein,
the identifying-side control unit is configured to learn a visual identification feature of an identified device, and control the identifying-side execution unit to perform visual identification on the identified device according to the visual identification feature; and
the identifying-side execution unit is configured to perform the visual identification on the identified device according to the control of the identifying-side control unit.

12. The device according to claim 11, wherein when learning the visual identification feature, the identifying-side control unit is configured to:
receive a message from the identified device, wherein the message comprises the visual identification feature of the identified device; or
send a message to the identified device, and receive a response message from the identified device, wherein the response message comprises the visual identification feature of the identified device.

13. The device according to claim 11 or 12, wherein when performing the visual identification on the identified device, the identifying-side execution unit is configured to:
obtain a visual identity which is used for identifying the identified device, and compare the visual identity with the visual identification feature of the identified device to identify the identified device.

14. The device according to claim 13, wherein when obtaining the visual identity, the identifying-side execution unit is configured to:
acquire an image or video clip in a visual range through a camera, and analyze the acquired image or video clip to obtain the visual identity; or,
read the visual identity which is pre-stored in the visual identification device.

15. The device according to claim 13, wherein the visual identity comprises at least one of the following: a bar code label, a two-dimension code label, a text label and a trademark sign.

16. The device according to claim 11 or 12, wherein the identifying-side control unit is further configured to, after completing the visual identification on the identified device, control the identifying-side execution unit to perform identification result verification with the identified device.

17. The device according to claim 16, wherein when performing the identification result verification, the identifying-side execution unit is configured to receive a visual signal from the identified device to implement the identification result verification.

18. The device according to claim 17, wherein the visual signal comprises at least one of the following: a visible optical signal, an invisible optical signal, an optical signal feature, and a figure and image on a display screen.

19. The device according to claim 11, wherein after completing the visual identification on the identified device, the identifying-side control unit is further configured to control the identifying-side execution unit to measure spatial location information of the identified device.

20. The device according to claim 11, further comprising a storage unit, which is configured to store information for identifying the identified device.

21. The device according to claim 11, further comprising an identifying-side network unit, which is configured to support communication between each unit in the device and the identified device.

22. The device according to claim 11, wherein the visual identification feature comprises at least one of the following: a label, a device figure, a device image and a visual signal.

23. A device for realizing visual identification, the device being an identified device and comprising an identified-side control unit and an identified-side execution unit; wherein,
the identified-side control unit is configured to control the identified-side execution unit to provide a visual identification feature of the identified device to a visual identification device; and
the identified-side execution unit is configured to provide the visual identification feature to the visual identification device according to the control of the identified-side control unit.

24. The device according to claim 23, wherein when providing the visual identification feature, the identified-side execution unit is configured to:
send a message to the visual identification device, wherein the message comprises the visual identification feature; or,
receive a message from the visual identification device, and return a response message to the visual identification device, wherein the response message comprises the visual identification feature.

25. The device according to claim 23 or 24, wherein the identified-side control unit is further configured to control the identified-side execution unit to perform identification result verification with the visual identification device.

26. The device according to claim 25, wherein when performing the identification result verification, the identified-side control unit is configured to send a visual signal to the visual identification device to implement the identification result verification.

27. The device according to claim 26, wherein the visual signal comprises at least one of the following: a visible optical signal, an invisible optical signal, an optical signal feature, and a figure and image on a display screen.

28. The device according to claim 23, further comprising an identified-side network unit, which is configured to support communication between each unit in the device and the visual identification device.

29. The device according to claim 23, wherein the visual identification feature comprises at least one of the following: a label, a device figure, a device image and a visual signal.

30. A system for realizing visual identification, comprising a visual identification device and an identified device; wherein,
the visual identification device is configured to learn a visual identification feature of the identified device, and perform visual identification on the identified device according to the visual identification feature; and
the identified device is configured to provide the visual identification feature to the visual identification device.
